# EUROPEAN PATENT SPECIFICATION

(11) **EP 2 412 479 B1**
(45) Date of publication and mention of the grant of the patent: **31.08.2016**
(21) Application number: 11175329.9
(22) Date of filing: 26.07.2011
(51) Int. Cl.: B25B 11/00, B23Q 1/03, B23Q 3/08

(54) **Supporting and retaining device**
Stütz- und Haltevorrichtung
Dispositif de support et maintien

(30) Priority: 26.07.2010 IT TO20100643
(43) Date of publication of application: 01.02.2012
(73) Proprietor: Bottero S.p.A., Cuneo (IT)
(72) Inventor: Giorgini, Luca, 61122 Villa Ceccolini (IT); Rombaldoni, Luigi, 61122 Pesaro (IT)
(74) Representative: Bergadano, Mirko

(56) References cited:
- EP-A1- 0 960 688
- US-A- 5 346 193
- US-A- 5 487 536

## Description

The present invention relates to an assembly for supporting and retaining glass sheets or stone slabs in general, and contoured glass sheets or stone slabs in particular.

In glass sheet or stone slab machining, the edges and lateral surfaces of the sheets/slabs are ground, polished, drilled and/or milled. At least some of these operations - specifically, grinding and polishing - are performed on machine tools equipped with abrasive tools positioned over a horizontal supporting surface, on which the work sheets/slabs are laid flat and supported in a raised position by the interposition of suction cup supporting and retaining devices, as disclosed for example in EP0960688, US5346193 and US5487536.

Each supporting and retaining device comprises a connecting base contacting and connected releasably to the supporting surface; a top suction cup body for supporting and retaining the work sheet/slab; and a vertical stem interposed between the connecting base and the suction cup body. The stem is hollow and defines an inner conduit communicating at one end with the suction cup body, and at the other end with an air chamber, which is depressurized to retain the sheet/slab, and is pressurized to move and position the sheet/slab. Though widely used, known devices of the above type have various drawbacks, foremost of which is reliability and performance depending on thorough periodic cleaning of the supporting surface on the machine.

More specifically, when and after machining the sheets/slabs, the coolant mixes with the machining debris, and forms sludge, which settles on and impairs operation of the supporting and retaining devices. The sludge also settles on the supporting surface, where it eventually forms a layer with actual 'steps', which not only impair efficiency of the supporting and retaining devices, but also prevent them from being positioned properly at each production changeover. In fact, within even only a short operating period, and after being repositioned only once or more, the supporting and retaining devices are no longer perfectly vertical - a condition which is not always obvious to the naked eye, but which prevents the supporting and retaining devices from being connected properly to the supporting surface on one side, and to the sheet/slab on the other.

Accordingly, the supporting and retaining devices must be cleaned continually, and the supporting surface continually scraped by hand and even ground periodically.

It is an object of the present invention to provide a glass sheet or stone slab supporting and retaining assembly designed to provide a simple, low-cost solution to the above drawbacks.

According to the present invention, there is provided a glass sheet or stone slab supporting and retaining assembly as claimed in claim 1.

The present invention also relates to a glass sheet or stone slab supporting and retaining unit,.

According to the present invention, there is provided a glass sheet or stone slab supporting and retaining unit as claimed in Claim 9.

A non-limiting embodiment of the present invention will be described by way of example with reference to the accompanying drawings, in which :
Figure 1 shows a partial view in perspective of a machine for machining glass sheets or stone slabs and equipped with a preferred embodiment of a sheet/slab supporting and retaining unit in accordance with the teachings of the present invention;
Figure 2 shows a larger-scale section, along line II-II in Figure 1, of a preferred embodiment of a supporting and retaining assembly in accordance with the present invention;
Figure 3 shows a larger-scale view in perspective of a detail in Figure 2;
Figures 4a and 4b show two different, larger-scale views in perspective of another detail in Figure 2.

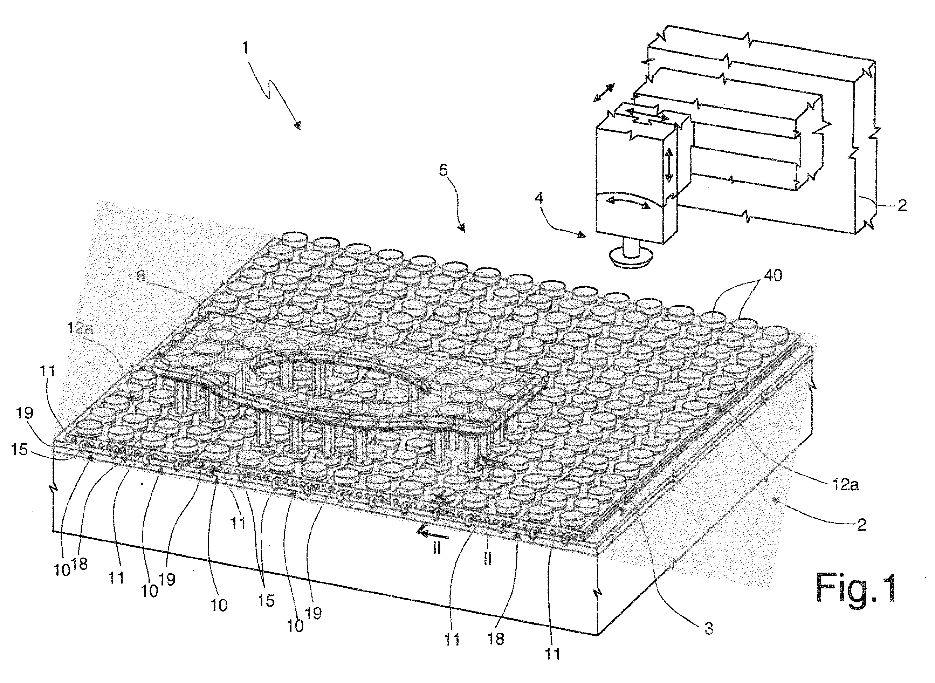

Number 1 in Figure 1 indicates as a whole a machine for machining glass sheets or stone slabs, and which comprises a frame 2 defining a horizontal supporting surface 3; and a machining head 4 - in this case, a grinding head - movable in known manner over supporting surface 3.

As shown in Figure 1, surface 3 is fitted with a configurable unit 5 for supporting and retaining a glass sheet or stone slab 6 for machining.

In the example described, supporting and retaining unit 5 comprises a number of coplanar, side by side supporting and retaining devices 10 for keeping the work sheet/slab 6 in a fixed horizontal position, as shown in Figure 1.

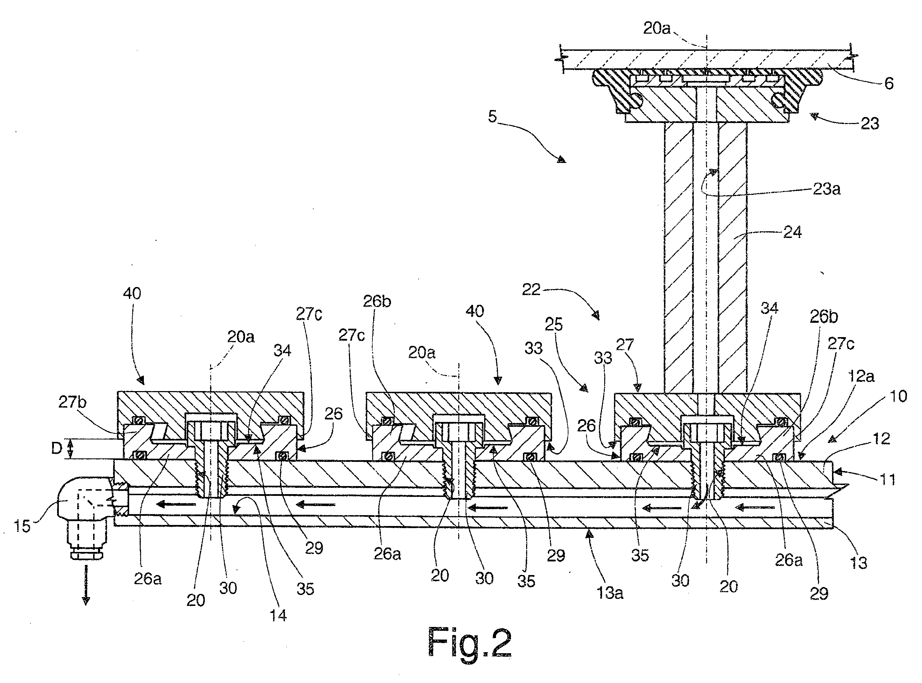

Each supporting and retaining device 10 comprises an elongated frame or hollow fastening and supporting panel 11, which has a top wall 12, and a bottom wall 13 resting on surface 3. Walls 12 and 13 are bounded by respective flat rectangular surfaces 12a and 13a; each hollow panel 11 defines an inner air chamber 14 (Figure 2) connected by a number of fittings 15 to a known suction/blower unit (not shown); and hollow panels 11 are separate and independent of one another, and arranged side by side and coplanar with one another to cover either the whole of surface 3, as in the Figure 1 example, or only part of it, leaving an area of surface 3 exposed for other uses.

Each hollow panel 11 is foolproof connected firmly to the adjacent panel 11 by a releasable sliding male-female joint 18, and is fixed to frame 2 by screws or conveniently by suction; in which latter case, wall 13 of each hollow panel 11 has grooves 19 connected pneumatically to said suction unit.

As shown in Figure 2, wall 12 and surface 12a of each panel 11 have a number of through holes 20 formed, in the example shown, at the nodes of a quadrangular grid (Figure 1) and having respective vertical axes 20a perpendicular to surfaces 12a and 13a. Each hole 20 connects chamber 14 of relative hollow panel 11 to the outside, and is kept closed or open by a respective sheet/slab supporting and retaining assembly 22.

As shown in Figure 2, each assembly 22 comprises a known suction cup supporting and retaining head 23 for engaging sheet/slab 6, possibly alongside a known sheet/slab retaining and/or locating device (not shown); a vertical stem 24 supporting head 23; and a releasable fastening device 25 for fastening stem 24 to surface 12a of respective hollow panel 11.

As shown in Figures 2, 3 and 4, each device 25 comprises two opposite, cup-shaped interface bodies 26 and 27. Body 26 has a bottom wall 26a resting on surface 12a at relative hole 20, with the interposition of a seal 29, and fixed to relative hollow panel 11 by a hollow screw 30 coaxial with relative axis 20a; and a tubular lateral wall 26b projecting upwards towards, head 23 and also coaxial with axis 20a.

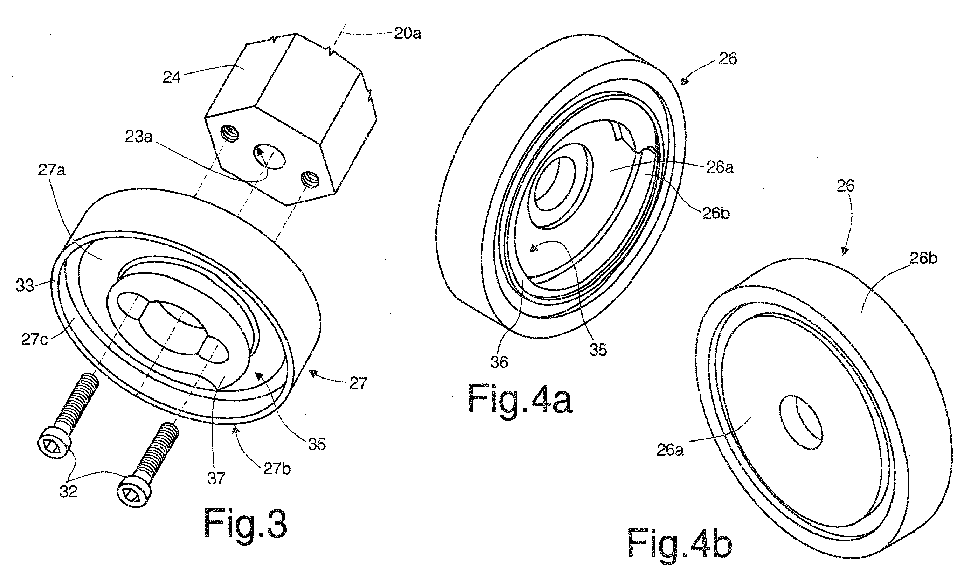

Body 27 has a bottom wall 27a fixed to stem 24 by two screws 32, as shown in Figure 3; and a tubular lateral wall 27b extending towards surface 12a, coaxially with axis 20a, and with an inside diameter approximating but no smaller than the outside diameter of wall 26b. Wall 27b has a free end portion 27c, which fits over a free end portion of lateral wall 26b and is bounded by an annular end surface 33 facing and parallel to surface 12a, and separated from surface 12a by a distance D of conveniently eight millimetres, but at any rate enough to prevent body 27 from contacting the layer of machining debris on surface 12a of the machine, before it is routinely removed.

Bodies 26 and 27 between them define an airtight chamber 34, in which a device 35 for releasably connecting bodies 26 and 27 is housed completely in a protected position above or detached from surface 12a, as shown in Figure 2.

As shown in Figures 2, 3 and 4, each device 35 is a fast-fit connecting device, and comprises two cam portions 36, 37 integral with bodies 26 and 27 respectively, and inserted one inside the other to define a bayonet joint for holding bodies 26 and 27 together, and keeping stem 24 strictly coaxial with axis 20a, as shown in Figure 2.

Both cam portions 36, 37 and the bottom wall of body 26 have a passage coaxial with axis 20a and communicating at one end with the inside of hollow screw 30 and therefore with chamber 14, and at the other end with a hole 23a formed in stem 24, coaxially with axis 20a, and in turn communicating with suction cup head 23.

As shown in Figure 2, each assembly 22 also comprises a cap 40 for covering body 26, when body 27 is detached from body 26, and for closing the passages to chamber 14. Cap 40 fits onto body 26 in the same way as body 27, and differs from body 27 solely by having no passages connecting airtight chamber 34 to the outside, and no holes for screws 32.

In actual use, assuming bodies 26 are all fitted with respective caps 40, and given the size and shape of sheet/slab 6 for machining, the appropriate number of caps 40 are removed, a respective body 27 is fitted to each of the exposed bodies 26, and stem 24 is rotated about respective axis 20a to lock stem 24 and respective suction cup head 23 firmly in position, coaxial with respective axis 20a. At this point, sheet/slab 6 is laid on and fixed to heads 23 by activating the suction source, which, via holes 23a in stems 24, activates suction cup heads 23 to retain sheet/slab 6 (Figure 2).

When machining sheet/slab 6, the coolant and machining debris settle on the part of surface 12a not occupied by bodies 26, and at no time come into contact with connecting devices 35, which are protected and isolated at all times, thus ensuring efficient, reliable operation of connecting devices 35, regardless of the type and amount of machining debris on surface 12a.

Bodies 27 and caps 40 are perfectly interchangeable, and suction cup heads 23 can be positioned on surface 12a to accommodate sheets/slabs 6 of different shapes and sizes, i.e. at each production change, by virtue of the end surfaces 33 of both bodies 27 and caps 40 being detached from surface 12a, so body 27 or cap 40 can be fitted on even in the presence of a thick layer of debris, or at least of the thickness normally produced prior to routine cleaning of surface 12a. Unlike known solutions, assemblies 22 described therefore eliminate the need for frequent thorough cleaning of machine 1 and, in particular, routine grinding of the stem 24 mounting surface, thus also reducing downtime and cost. Moreover, being unaffected by machining debris on surface 12a, stems 24 are positioned perfectly vertical at all times, thus ensuring strictly horizontal support of the sheet/slab, even in the presence of a thick layer of machining debris.

Using hollow panels and, generally speaking, independent parts connectable to existing supporting surfaces enables use of unit 5 on existing machines, and above all even only on part of the supporting surface of the machine, leaving the rest free for other uses.

Clearly, changes may be made to both assembly 22 and sheet/slab supporting and retaining unit 5 as a whole. For example, the connecting device of assembly 22 need not be housed, or may be housed only partly, inside chamber 34, while still being protected and detached from body 26 mounting surface 12a, and therefore still unaffected by the thickness of the machining debris deposited on surface 12a when machining sheet/slab 6.

Finally, machine 1 may comprise a single panel integrated in the machine structure and, for example, forming part of the machine bed.

## Claims

1. A glass sheet or stone slab supporting and retaining assembly (22) comprising a suction cup supporting and retaining head (23) designed to engage a glass sheet or stone slab (6); a vertical hollow stem (24) supporting said suction cup head (23); and releasable fastening means (25) for fastening said stem (24) to a flat mounting surface (12a) of a machine (1); said fastening means (25) comprising a first interface body (26) which is able or configured to fit to, and to project upwards from, said flat mounting surface (12a) and having a bottom wall (26a) resting, in use, on said flat mounting surface (12a); a second interface body (27) connected firmly to said stem (24); releasable connecting means (35) interposed between said first (26) and said second interface body (27); and protection means (34) for protecting at least said releasable connecting means (35); said assembly (22) further comprising a suction/blow conduit (23a) extending through said stem (24), said first and second interface body (26)(27), and said releasable connecting means (35) and communicating at one end with the inside of said suction cup head (23), **characterized in that** said fastening means (25) further comprises a hollow fixing screw (30) protruding from said bottom wall (26a) and able to be coaxially screwed in a hole (20) of said flat mounting surface (12a) for fixing said first interface body to said flat mounting surface (12a), and **in that** said conduit (23a) communicates at the other end with a passage formed through said hollow screw (30) that defines a terminal portion of said conduit (23a).

2. An assembly as claimed in Claim 1, **characterized in that** said second interface body (27) forms at least part of said protection means.

3. An assembly as claimed in Claim 1 or 2, **characterized in that** said first and second interface body (26)(27) define a chamber (34); and said releasable connecting means (35) are housed and protected in said chamber (34).

4. An assembly as claimed in Claim 2, **characterized in that** said chamber is an airtight chamber.

5. An assembly as claimed in one of Claims 1 to 3, **characterized in that** said first interface body (26) is at least partly inserted inside said second interface body (27); and said second interface body (27) is bounded, on the side facing, in use, said flat mounting surface (12a), by an annular surface 33) raised, in use, with respect to said flat mounting surface (12a).

6. An assembly as claimed in any one of the foregoing Claims, **characterized in that** said releasable connecting means are fast-fit connecting means.

7. An assembly as claimed in Claim 6, **characterized in that** said fast-fit connecting means comprise at least a bayonet joint.

8. An assembly as claimed in Claim 1, **characterized by** also comprising at least one cap (40) for covering said first interface body (26) and closing said passage (23a) in fluidtight manner; said second interface body (27) and said cap (40) being selectively fittable releasably to said first interface body (26) by said releasable connecting means.

9. A unit (5) for supporting and retaining a glass sheet or stone slab (6) for machining; the unit comprising a number of glass sheet or stone slab supporting and retaining assemblies (22), each as claimed in Claim 1; the unit (5) also comprising at least one hollow supporting panel (11), which fits to a machine frame and comprises said flat mounting surface (12a); said hollow supporting panel (11) defining at least one chamber (14) for a depressurized/pressurized fluid, and having, for each said supporting and retaining assembly (22), an opening (20) connecting said chamber (14) to the outside and formed through said flat mounting surface (12a); and each said first interface body (26) being connected firmly to said hollow supporting panel (11) by said hollow screw (30) at the respective said opening (20).

10. A unit as claimed in Claim 9, **characterized in that** each said supporting and retaining assembly (22) comprises hollow screw (30) for connecting said first interface body to the relative said hollow supporting panel (11); said hollow screw defining a passage communicating with said chamber (14).

11. A unit as claimed in Claim 9 or 10, **characterized by** also comprising at least one further hollow supporting panel (11) alongside, coplanar with, and independent of said hollow supporting panel; said further hollow supporting panel defining a respective further chamber (14), and being fitted with respective said first interface bodies at respective said openings communicating with said further chamber; releasable fastening means (18) being interposed between said panels.

## Patentansprüche

1. Stütz- und Halteanordnung (22) für Glas- und Steinplatten, mit einem Saugnapfstütz- und -haltekopf (23), der zum Angreifen an einer Glas- oder Steinplatte (6) ausgebildet ist; einem vertikalen hohlen Schaft (24), der den Saugnapfkopf (23) stützt; und einer lösbaren Befestigungseinrichtung (25) zum Befestigen des Schafts (24) an einer ebenen Befestigungsfläche (12a) einer Maschine (1); wobei die Befestigungseinrichtung (25) einen ersten Verbindungskörper (26) aufweist, der in der Lage oder dazu ausgebildet ist, an der ebenen Befestigungsfläche (12a) anzuliegen und von dieser nach oben zu ragen, und der eine Bodenwand (26a) aufweist, die im Gebrauch auf der ebenen Befestigungsfläche (12a) aufliegt; einen fest mit dem Schaft (24) verbundenen zweiten Verbindungskörper (27); eine lösbare Verbindungseinrichtung (35), die zwischen dem ersten (26) und dem zweiten Verbindungskörper (27) angeordnet ist; und eine Schutzeinrichtung (34) zum Schützen zumindest der lösbaren Verbindungseinrichtung (35); wobei die Anordnung (22) ferner einen Saug-/ Blas-Kanal (23a) aufweist, welcher sich durch den Schaft (24), den ersten und den zweiten Verbindungskörper (26) (27) und die lösbare Verbindungseinrichtung (35) erstreckt und an einem Ende mit dem Inneren des Saugnapfkopfs (23) in Verbindung steht, **dadurch gekennzeichnet, dass** die Befestigungseinrichtung (25) ferner eine hohle Fixierschraube (30) aufweist, die von der Bodenwand (26a) absteht und in der Lage ist, koaxial in ein Loch (20) der ersten Befestigungsfläche (12a) geschraubt zu werden, um den ersten Verbindungskörper an der ebenen Befestigungsfläche (12a) anzubringen, und dass der Kanal (23a) an dem anderen Ende mit einem durch die hohle Schraube (30) hindurch gebildeten Durchlass verbunden ist, welcher einen Endbereich des Kanals (23a) definiert.

2. Anordnung nach Anspruch 1, **dadurch gekennzeichnet, dass** der zweite Verbindungskörper (27) zumindest einen Teil der Schutzeinrichtung bildet.

3. Anordnung nach Anspruch 1 oder 2, **dadurch gekennzeichnet, dass** der erste und der zweite Verbindungskörper (26) (27) eine Kammer (34) bilden; und die lösbare Verbindungseinrichtung (35) in der Kammer (34) aufgenommen und geschützt ist.

4. Anordnung nach Anspruch 2, **dadurch gekennzeichnet, dass** die Kammer eine luftdichte Kammer ist.

5. Anordnung nach einem der Ansprüche 1 bis 3, **dadurch gekennzeichnet, dass** der erste Verbindungskörper (26) zumindest teilweise in den zweiten Verbindungskörper (27) eingesetzt ist; und der zweite Verbindungskörper (27) auf der im Gebrauch der ebenen Befestigungsfläche (12a) zugewandten Seite durch eine ringförmige Fläche (33) begrenzt ist, die im Gebrauch in Bezug auf die ebene Befestigungsfläche (12a) angehoben ist.

6. Anordnung nach einem der vorhergehenden Ansprüche, **dadurch gekennzeichnet, dass** die lösbare Verbindungseinrichtung eine Schnellverbindungseinrichtung ist.

7. Anordnung nach Anspruch 6, **dadurch gekennzeichnet, dass** die Schnellverbindungseinrichtung zumindest eine Bajonettverbindung aufweist.

8. Anordnung nach Anspruch 1, **dadurch gekennzeichnet, dass** sie ferner mindestens eine Kappe (40) zum Abdecken des ersten Verbindungskörpers (26) und zum Schließen des Durchgangs (23a) in fluiddichter Weise aufweist; wobei der zweite Verbindungskörper (27) und die Kappe (40) mittels der lösbaren Verbindungseinrichtung wahlweise lösbar an dem ersten Verbindungskörper (26) anbringbar sind.

9. Einheit (5) zum Stützen und Halten einer Glas- oder Steinplatte (6) zur Bearbeitung; wobei die Einheit eine Anzahl von Stütz- und Halteanordnungen (22) für Glas- und Steinplatten, die jeweils nach Anspruch 1 ausgebildet sind, aufweist; wobei die Einheit (5) ferner zumindest eine hohle Stützplatte (11) aufweist, welche an einen Maschinenrahmen angebracht ist und die ebene Befestigungsfläche (12a) aufweist; wobei die hohle Stützplatte (11) mindestens eine Kammer (14) für ein entspanntes/druckbeaufschlagtes Fluid bildet und für jede Stütz- und Halteanordnung (22) eine Öffnung (20) aufweist, welche die Kammer (14) mit der Außenseite verbindet und durch die ebene Befestigungsfläche (12a) hindurch ausgebildet ist; und wobei jeder erste Verbindungskörper (26) durch die hohle Schraube (30) an der jeweiligen Öffnung (20) fest mit der hohlen Stützplatte (11) verbunden ist.

10. Einheit nach Anspruch 9, **dadurch gekennzeichnet, dass** jede Stütz- und Halteanordnung (22) eine hohle Schraube (30) zum Verbinden des ersten Verbindungskörpers mit der betreffenden hohlen Stützplatte (11) aufweist; wobei die hohle Schraube einen Durchgang bildet, der mit der Kammer (14) verbunden ist.

11. Einheit nach Anspruch 9 oder 10, **dadurch gekennzeichnet, dass** sie ferner mindestens eine weitere hohle Stützplatte (11) neben, komplanar zu und unabhängig von der genannten hohlen Stützplatte aufweist; wobei die weitere hohle Stützplatte eine jeweilige weitere Kammer (14) bildet und mit jeweiligen ersten Verbindungskörpern an jeweiligen Öffnungen, die mit der ersten Kammer verbunden ist, versehen ist; wobei zwischen den Platten lösbare Befestigungseinrichtungen (18) vorgesehen sind.

## Revendications

1. Assemblage de support et de maintien (22) de feuilles de verre ou de plaques de pierre, comportant une coupole d'aspiration portant une tête de support et de maintien (23) de la coupole d'aspiration, agencée pour entrer en contact avec une feuille de verre ou une plaque de pierre (6); une poutre creuse verticale (24) portant ladite tête de support et de maintien (23) de la coupole d'aspiration; et des moyens de fixation amovibles (25) pour fixer ladite poutre (24) à une surface plane de montage (12a) d'une machine (1); lesdits moyens de fixation comportant un premier corps d'interface (26) qui est capable ou agencé pour se fixer à et pour se projeter vers le haut à partir de ladite surface plane de montage (12a) et ayant une paroi de fond (26a), reposant, en utilisation, sur ladite surface de montage (12a); un second corps d'interface (27) couplé rigidement à ladite poutre (24); des moyens de couplage amovibles (35) interposés entre ledit premier (26) et ledit second (27) corps d'interface; et des moyens de protection (34) pour protéger au moins lesdits moyens de couplage amovibles (35); ledit assemblage (22) comportant en outre un conduit d'aspiration/soufflage (23a) qui s'étend à travers ladite poutre (24), ledit premier et second corps d'interface(26) (27), et lesdits moyens de couplage amovibles (35) et communiquant, à une extrémité avec l'intérieur de ladite tête de coupole d'aspiration (23), **caractérisé en ce que** lesdits moyens de fixation (25) comportent en outre une vis de fixation creuse (30) en relief par rapport à ladite paroi de fond (26a) et capable d'être vissée coaxialement dans un orifice (20) ménagé dans ladite surface plane de montage (12a) pour fixer ledit premier corps d'interface sur ladite surface de montage plane (12a), et **en ce que** ledit conduit (23a) communique à l'autre extrémité avec un passage formé à travers ladite vis creuse (30) qui définit une portion terminale dudit conduit (23a).

2. Assemblage selon la revendication 1, **caractérisé en ce que** ledit second corps d'interface (27) constitue au moins une partie desdits moyens de protection.

3. Assemblage selon les revendications 1 ou 2, **caractérisé en ce que** lesdits premier et second corps d'interface (26) (27) définissent une chambre (34); et **en ce que** lesdits moyens de couplage amovibles (35) sont logés et protégés dans ladite chambre (34).

4. Assemblage selon la revendication 2, **caractérisé en ce que** ladite chambre est une chambre étanche à l'air.

5. Assemblage selon l'une des revendications 1 à 3, **caractérisé en ce que** ledit premier corps d'interface (26) est au moins partiellement inséré dans ledit second corps d'interface (27); et ledit second corps d'interface (27) est lié, au côté en regard, en utilisation, de ladite surface plane de montage (12a), par une surface annulaire (33), dressée, en utilisation, par rapport à ladite surface plane de montage (12a).

6. Assemblage selon l'une quelconque des revendications précédentes, **caractérisé en ce que** lesdits moyens de couplage amovibles sont des moyens de fixation rapide par encliquetage.

7. Assemblage selon la revendication 6, **caractérisé en ce que** lesdits moyens de fixation rapide par encliquetage comprennent au moins une liaison à baïonnette.

8. Assemblage selon la revendication 1, **caractérisé en ce qu'**il comprend également au moins un couvert (40) pour couvrir ledit premier corps d'interface (26) et pour fermer ledit passage (23a) de manière étanche aux fluides; ledit second corps d'interface (27) et ledit couvert (40) pouvant être sélectivement fixé audit premier corps d'interface (26) par lesdits moyens de couplage amovibles.

9. Unité (5) pour supporter et maintenir une feuille de verre ou une plaque de pierre (6) en vue de son usinage; l'unité comportant une pluralité de feuilles de verre ou de plaques de pierre agencées pour supporter et retenir des assemblages (22), chacun selon la revendication 1, l'unité (5) comprenant également au moins un panneau creux de support (11) qui est ajusté à un cadre de machine et comporte ladite surface plane de montage (12a); ledit panneau creux de support (11) définissant au moins une chambre (14) pour un fluide de dépressurisation/pressurisation et ayant, pour chacun desdits assemblages de support et de maintien (22) une ouverture (20) connectée à cette chambre (14) avec l'extérieur et formée à travers ladite surface plane de montage (12a); et chacun desdits premiers corps d'interface (26) étant connecté rigidement audit panneau creux de support (11) par ladite vis creuse (30) à ladite ouverture (20) respective.

10. Unité selon la revendication 9, **caractérisée en ce que** chacun dudit assemblage de support et de maintien (22) comporte une vis creuse (30) pour connecter ledit premier corps d'interface au panneau creux de support (11) correspondant; ladite vis creuse définissant un passage de communication avec ladite chambre (14).

11. Unité selon les revendications 9 ou 10, **caractérisée en ce qu'**elle comporte également au moins un nouveau panneau de support creux (11) longitudinal, coplanaire et indépendant dudit panneau de support creux; ledit panneau de support supplémentaire définissant une chambre complémentaire respective (14) et étant lié avec lesdits corps d'interfaces respectifs aux ouvertures de communication respectives avec ladite chambre complémentaire; des moyens de couplage amovibles (18) étant interposés entre lesdits panneaux.
